# EUROPÄISCHE PATENTSCHRIFT

(11) **EP 0 805 566 B1**
(45) Veröffentlichungstag und Bekanntmachung des Hinweises auf die Patenterteilung: **15.02.2006**
(21) Anmeldenummer: 97106828.3
(22) Anmeldetag: 24.04.1997
(51) Int. Cl.: H04B 7/10

(54) **Funkstation zum Senden und Empfangen digitaler Informationen in einem Mobil-Kommunikationssystem**
Radio station for transmitting and receiving digital information in a mobile communications system
Station radio pour émettre et recevoir des informations numériques dans un système de communication mobile

(30) Priorität: 29.04.1996 DE 19617140
(43) Veröffentlichungstag der Anmeldung: 05.11.1997
(73) Patentinhaber: SIEMENS AKTIENGESELLSCHAFT, 80333 München (DE)
(72) Erfinder: Färber, Michael, 82515 Wolfratshausen (DE); Mühlbauer, Helmut, 82166 Lochham (DE); Wangerczyn, Franz-Peter, 85635 Höhenkirchen-Siegertsbrunn (DE)

(56) Entgegenhaltungen:
- EP-A- 0 118 357
- EP-A- 0 642 232
- US-A- 5 262 788

## Beschreibung

Die Erfindung betrifft eine Funkstation zum Senden und Empfangen digitaler Informationen in einem Mobil-Kommunikationssystem entsprechend dem Oberbegriff des Patentanspruchs 1.

Funkstationen dienen der Übertragung von Informationen mit Hilfe elektromagnetischer Wellen. Das Frequenzspektrum der in Frage kommenden elektromagnetischen Wellen reicht von wenigen KHz bis zu mehreren hundert GHz, wobei insbesondere das Frequenzspektrum im unteren Gigaherzbereich durch die Entwicklung der Mobilfunktechnik an Bedeutung gewonnen hat. So werden Funkstationen für die Mobilfunktechnik bei ca. 0,9 und 1,8 GHz eingesetzt. Ein Mobil-Kommunikationssystem ist beispielsweise das GSM-Mobilfunknetz (Global System for Mobile Communications), aber auch bekannte Drahtlos-Kommunikationsnetze, z.B. nach dem DECT-Standart, realisieren ein solches Mobil-Kommunikationssystem.

Sind diese Funkstationen dafür vorgesehen, Informationen sowohl zu senden als auch zu empfangen, umfassen sie zumindest eine Empfangseinheit und zumindest eine Sendeeinheit. In der Sendeeinheit werden die zu sendenden Informationen auf eine Trägerfrequenz moduliert und die generierten Sendesignale verstärkt. Die Empfangseinheit dient zur Auswertung der Information der Empfangssignale und deren Trennung vom Träger und von Rauschstörungen.

Eine solche Funkstation ist beispielsweise als Basisstation aus der deutschen Patentanmeldung 195 472 88.8 bekannt. Diese Funkstation umfaßt weiterhin eine Antenne zum Senden und Empfangen. So werden über diese Antenne sowohl die Sendesignale gesendet, als auch die Empfangssignale empfangen. Diese Funkstation weist jedoch den Nachteil auf, daß damit kein Diversityempfang möglich ist.

Aus der Druckschrift "Fernschreib- und Datenübertragung über Kurzwelle", L. Wiesner, Siemens Aktiengesellschaft, dritte Auflage, 1980, Seiten 94 bis 104, sind verschiedene Möglichkeiten der Realisierung eines Diversityempfangs bekannt. Unter anderem wird die Möglichkeit des Polarisationsdiversity vorgestellt, bei der zum Diversityempfang zwei Antennen verwendet werden, von denen die eine z.B. vertikal und die andere horizontal polarisiert ist. Ein solches Antennensystem ist auch aus der deutschen Patentschrift DE 2 032 002 B2 bekannt. Diese Schriften stellen Realisierungen des Diversityempfangs vor, die jedoch auf räumlich getrennten Antennen basieren und zudem die Problematik des Sendebetriebes nicht berücksichtigen.

Herkömmliche Mobil-Kommunikationssysteme, siehe Siemens Function Specification, A30862-X1001-A314-03-7659, MOBNET, vom 25.08.1995, S.5-2, realisieren eine Funkstation mit Diversitybetrieb auch dadurch, daß getrennte Antennen zum Senden und für jeden einzelnen Diversityzweig vorliegen. Die beiden Antennen für den Diversityempfang müssen jedoch eine gewisse räumliche Trennung aufweisen, um eine Dekorrelation der Empfangssignale zu gewährleisten. Eine andere Realisierungsmöglichkeit sieht das Duplex von Sendesignalen auf die Antennen zum Diversityempfang vor.-Jedoch muß auch hier eine räumliche Trennung der Antennen zum Diversityempfang vorliegen.

Aus US 5,262,788 ist eine Datenübertragung bekannt, die sende- und empfangsseitig Antennen mit zwei unterschiedlich polarisierten Erregersystemen benutzt, die ein nach bestimmten Kriterien polarisiertes Signal erzeugen bzw. auswerten. Bezüglich der Polarisation und anderer Signalparameter sind die Signalverarbeitungseinrichtungen der Empfangsseite auf die Signalerzeugungseinrichtungen der Sendeseite abgestimmt. Ein Diversity-Empfang ist nicht möglich.

Aus EP 0 642 232 A1 ist eine Funkstation mit mehreren Erregersystemen bekannt, wobei ein sendeseitig vorgesehenes Erregersystem von den empfangsseitig vorgesehenen Erregersystemen räumlich getrennt ist.

Aus US 4,704,733 ist eine Einrichtung zur Erweiterung einer Funkzelle bekannt. Dabei wird ein Signal eines "subscriber", das über zwei Antennen der Einrichtung empfangen wird, über zwei Signalpfade an eine Antenne mit zwei unterschiedlichen Polarisationen zur Weiterleitung an eine Basisstation übergeben.

Bei gegenwärtigen Mobil-Kommunikationssystemen besteht jedoch ein erheblicher Druck auf die Netzbetreiber, mit wenigen Antennenstandorten auszukommen. Hierbei bedeutet das Bereitstellen von zwei getrennten Antennen für den Diversityempfang einen erheblichen Nachteil.

Der Erfindung liegt deshalb die Aufgabe zugrunde, eine Funkstation zum Senden und Empfangen digitaler Informationen in einem Mobil-Kommunikationssystem anzugeben, die zum Senden und zum Diversityempfang einen geringen Platzbedarf für den Antennenstandort hat. Diese Aufgabe wird jeweils durch die erfindungsgemäße Funkstation des Patentanspruchs 1 ausgehend von den Merkmalen des Oberbegriffs durch die Merkmale des kennzeichnenden Teils gelöst. Vorteilhafte Weiterbildungen sind den Unteransprüchen zu entnehmen.

Erfindungsgemäß besteht die Antenne aus einem ersten und zweiten Erregersystem mit unterschiedlicher Polarisation. Zur gemeinsamen Nutzung der Antenne zum Senden und Empfangen verbindet ein erster Duplexer zumindest eine erste Sendeeinheit und eine erste Empfangseinheit mit einer gemeinsamen ersten Antennenleitung. Das erste Erregersystem ist über die erste Antennenleitung mit dem ersten Duplexer verbunden. Das zweite Erregersystem weist eine Verbindung mit zumindest der ersten Empfangseinheit über eine zweite Antennenleitung auf. Damit wird zumindest über die erste Empfangseinheit und beide Erregersysteme ein Diversityempfang gewährleistet. Weiterhin wird zumindest über das erste Erregersystem das Senden von digitalen Informationen realisiert.

Alternativ sind zumindest drei Erregersysteme, zwei zum Empfangen und eines zum Senden, in der Antenne vorgesehen, wobei sich die Erregersysteme durch ihre Polarisationsebenen unterscheiden. Durch diese Lösung kann der Duplexer eingespart werden, es ergibt sich jedoch ein erhöhter Aufwand bei der Realisierung der Antennne.

Die erfindungsgemäße Funkstation erfüllt vorteilhafterweise gleichzeitig die Forderung nach einer Reduzierung der Anzahl von Antennen und die Anforderungen eines Mobil-Kommunikationssystem mit Diversityempfang. Damit ist es Netzbetreibern möglich, vor allem in Ballungszentren strenge Auflagen, z.B. an optische und ästhetische Wirkungen des Antennensystems zu erfüllen.

Gemäß vorteilhaften Weiterbildungen haben das erste und das zweiter Erregersystem einen gemeinsamen geometrischen Mittelpunkt. Durch eine solche Anordnung der Erregersysteme kann der Platzbedarf der Antenne weiter verringert werden. Für einen hohen Antennengewinn werden für die Erregersysteme vorteilhafterweise Elementegruppen eingesetzt. Durch entsprechende Anordnungen der Elemente der Erregersysteme lassen sich ohne großen zusätzlichen Aufwand die Erzeugung von Strahlungsdiagrammen unterschiedlicher Polarisation realisieren.

Es ist dabei weiterhin möglich, weitere Erregersysteme in diese Antenne zu integrieren, wobei nach vorteilhaften Weiterbildungen der erfindungsgemäßen Funkstation diese zusätzlichen Erregersysteme entweder zum Diversityempfang oder zum Senden genutzt werden.

Soll die Abstrahlung der Sendesignale nicht nur über ein Erregersystem erfolgen, so sieht eine weitere vorteilhafte Ausgestaltung der erfindungsgemäßen Funkstation die Verbindung des zweiten Erregersystems mit der ersten Empfangseinheit über einen zweiten Duplexer vor, wobei der zweite Duplexer eine zweite Sendeeinheit und die erste Empfangseinheit mit der gemeinsamen zweiten Antennenleitung verbindet. Nach verschiedenen Realisierungsmöglichkeiten kann damit die Sendeenergie einer Sendeeinheit auf zwei Erregersysteme verteilt werden oder verschiedene Sendeeinheiten sind jeweils an ein Erregersystem angeschlossen.

Werden mehrere Empfangseinheiten in der Funkstation verwendet, dann ist es vorteilhaft, sie jeweils mit einem ersten und zweiten Trennverstärker (bei zwei Erregersystemen) zu verbinden und durch die Trennverstärker die Leistung der von den zwei Erregersystemen empfangenen Empfangssignale entsprechend auf die Empfangseinheiten zu verteilen. Durch den Einsatz von Trennverstärkern kann eine größere Anzahl von Empfangseinheiten eingesetzt werden.

Gemäß weiteren vorteilhaften Ausgestaltungen der erfindungsgemäßen Funkstation und insbesondere der Antenne sind die Erregersysteme derart angeordnet, daß die Kreuzpolarisationsentkopplung der Erregersysteme mindestens 30 dB beträgt. Diese Entkopplung entspricht der Entkopplung von zwei Antennen mit einem Meter Abstand bei 900 MHz. Durch diese Maßnahme soll gewährleistet werden, daß die Wechselwirkungen zwischen den sendenden und empfangenden Erregersystemen gering sind. Eine hohe Kreuzpolarisationskopplung wird z.B. erreicht, indem die Polarisationsebene des ersten und zweiten Erregersystems zueinander ca. 90 Grad geneigt sind. Die Neigung der Polarisationsebenen beider Brregersysteme im Vergleich zur Horizontalen kann auf verschiedene Art und Weise festgelegt sein. Besonders vorteilhaft ist es, beide Polarisationsebenen ca. 45 Grad zur Horizontalen zu neigen, damit sind sie nach diversen Reflektionen auf der Funkstrecke oder auch durch den direkten Ausbreitungspfad gleichberechtigt bei der empfangenden Funkstation. Eine weitere vorteilhafte Realisierungsvariante sieht vor, daß die Polarisationsebene eines die Sendesignale abstrahlenden Erregersystems etwa senkrecht zur Horizontalen ist. Diese Neigung korrespondiert zu den bisher üblichen Anordnungen von Sendeantennen.

Zum Anschluß einer großen Anzahl von Sendeeinheiten werden vorteilhafterweise Leistungskombiner eingesetzt, die jeweils mehrere Sendeeinheiten mit einem Duplexer oder direkt mit einem Erregersystem verbinden. Sollen mehrere Sendeeinheiten eingesetzt und die Verluste der Übertragung der Sendeenergie der Sendesignale zu den Erregersystemen gering gehalten werden, dann wird nach einer vorteilhaften Weiterbildung der Erfindung auf Leistungskombiner verzichtet, indem eine weitere Antenne hinzugefügt wird, deren Erregersysteme zum Senden oder auch zur Verbesserung des Diversity-Empfangs genutzt werden.

Die erfindungsgemäße Funkstation soll im folgenden unter Zuhilfenahme von zeichnerischen Darstellungen näher erläutert werden.

Dabei zeigt
- FIG 1: eine Funkstation mit zwei jeweils um 45 Grad zur Horizontalen geneigten Erregersystemen und jeweils vier Sende- und Empfangseinheiten,
- FIG 2: eine Funkstation mit zwei zueinander um 90 Grad geneigten Erregersystemen und senkrechter Polarisationsebene für die abgestrahlten Sendesignale,
- FIG 3: eine Funkstation mit einer vier Erregersysteme aufweisenden Antenne, und
- FIG 4: eine Funkstation mit zwei Antennen und vier jeweils mit einer Sendeeinheit verbundenen Erregersystemen.

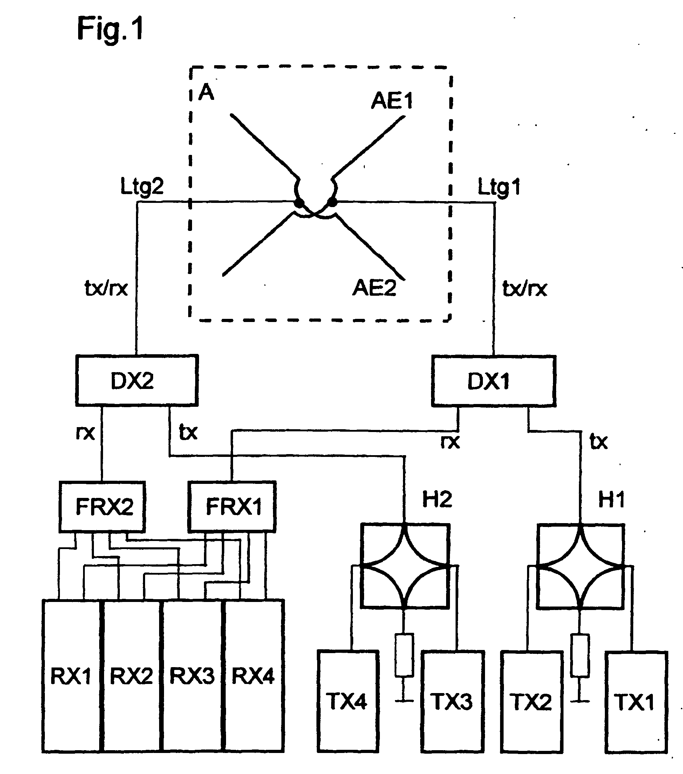

Die Funkstation FS nach FIG 1 besteht aus einer Antenne A, vier Empfangseinheiten RX1..4 und vier Sendeeinheiten TX1..4. Die Sendesignale tx der ersten und zweiten Sendeeinheit TX1, TX2 werden durch einen ersten Leistungskombiner H1 zusammengefaßt und einem ersten Duplexer DX1 zugeführt. Entsprechend werden die Sendesignale tx der dritten und vierten Sendeeinheit TX3, TX4 durch einen zweiten Leistungskombiner H2 zusammengefaßt und einem zweiten Duplexer DX2 zugeführt. Die Leistungskombiner H1, H2 realisieren die angepaßte Übertragung der Sendeenergie zu den Duplexern DX1, DX2.

Jeder dieser Duplexer DX1, DX2 hat eine Verbindung zu einem ersten Trennverstärker FRX1 bzw. einem zweiten Trennverstärker FRX2. Diese Trennverstärker FRX1, FRX2 sind ausgangsseitig jeweils mit vier Empfangseinheiten RX1..4 verbunden. Im Trennverstärker FRX1, FRX2 findet eine breitbanddige Filterung entsprechend der Systembandbreite statt und es erfolgt eine erneute Verstärkung, bevor die Energie der Empfangssignale rx gleichmäßig auf alle Empfangseinheiten RX1..4 verteilt wird. In den Empfangseinheiten RX1..4 erfolgt die Auswertung der Empfangssignale RX nach einem Diversityverfahren. Zu bekannten Diversity-Empfangsverfahren sei beispielsweise auf J.G.Proakis, "Digital Communications", McGraw Hill, 1989, verwiesen.

Der erste und zweite Duplexer DX1, DX2 verbindet die Sendeeinheiten DX1..4 und Empfangseinheiten RX1..4 mit einer ersten bzw. zweiten Antennenleitung Ltg1, Ltg2. Diese Antennenleitungen Ltg1, Ltg2 führen zur Antenne A. Diese Antenne A besteht aus zwei Erregersystemen AE1, AE2. Das erste Erregersystem AE1 ist mit der ersten Antennenleitung Ltg1 und das zweite Erregersystem AE2 ist mit der zweiten Antennenleitung Ltg2 verbunden. Beide Erregersysteme AE1, AE2 sind ca. 45 Grad zur Horizontalen der Erde und zueinander um ca. 90 Grad geneigt. Entsprechend sind auch die Polarisationsebenen ihrer Abstrahlungsrichtungen geneigt. Bei den Erregersystemen handelt es sich z.B. um Gruppenantennen, die jeweils aus mehreren Einzelelementen bestehen.

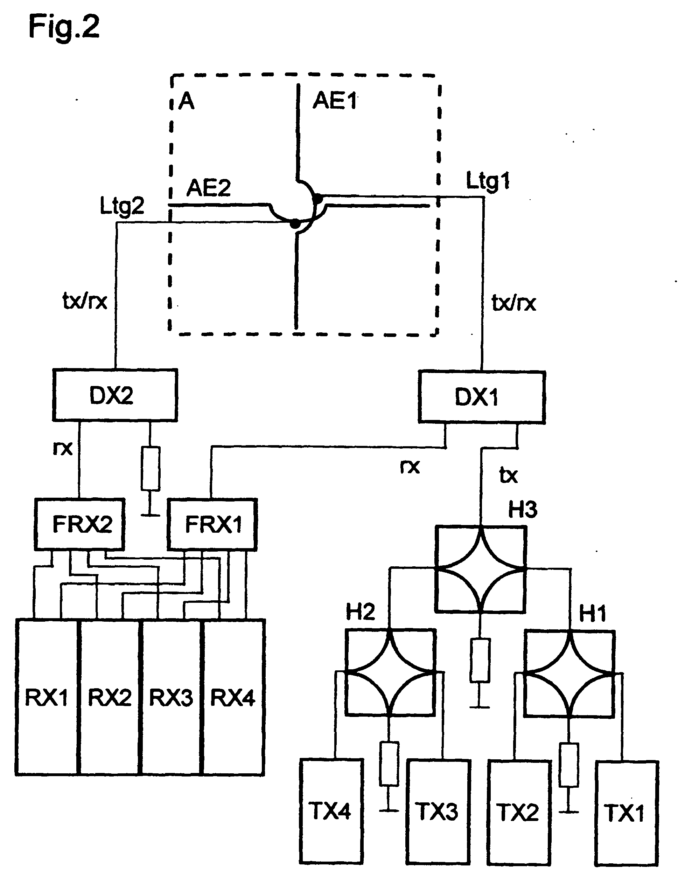

Die Funkstation FS nach FIG 2 besteht wiederum aus einer Antenne A, vier Sendeeinheiten TX1..4 und vier Empfangseinheiten RX..4. Die Kombination der Sendeenergien der Sendesignale tx der vier Sendeeinheiten TX1..4 erfolgt jedoch im Gegensatz zur Funkstation FS nach FIG 1 auf andere Art und Weise. Nach der Kombination der Sendesignale tx der ersten und zweiten Sendeeinheit TX1, TX2 in einem ersten Leistungskombiner H1 und der Kombination der Sendesignale tx der dritten und vierten Sendeeinheit TX3, TX4 in einem zweiten Leistungskombiner H2 werden diese Sendesignale tx noch einmal in einem dritten Leistungskombiner H3 zusammengefaßt und lediglich dem ersten Duplexer DX1 zugeführt. Der zweite Duplexer DX2 wird sendeeinheitsseitig angepaßt abgeschlossen. Der Anschluß der Empfangseinheiten RX1..4 erfolgt entsprechend der Anordnung der Empfangseinheiten RX1..4 nach FIG 1.

Der Anschluß des ersten und zweiten Erregersystems AE1, AE2 der Antenne A erfolgt wiederum über eine erste und zweite Antennenleitung Ltg1, Ltg2 zu den ersten und zweiten Duplexern DX1, DX2. Das erste Erregersystem AE1 ist senkrecht zur Horizontalen angeordnet und ca. 90 Grad zum zweiten Erregersystem AE2 geneigt. Damit weist das Abstrahlungs-diagramm der Sendesignale tx eine vertikale Polarisation auf. Wie auch in FIG 1 werden die Empfangssignale rx in beiden Polarisationsebenen empfangen. Durch diese Anordnung der Erregersysteme AE1, AE2 wird, ebenso wie für die Funkstation FS nach FIG 1, ein Polarisationsdiversityempfang umgesetzt.

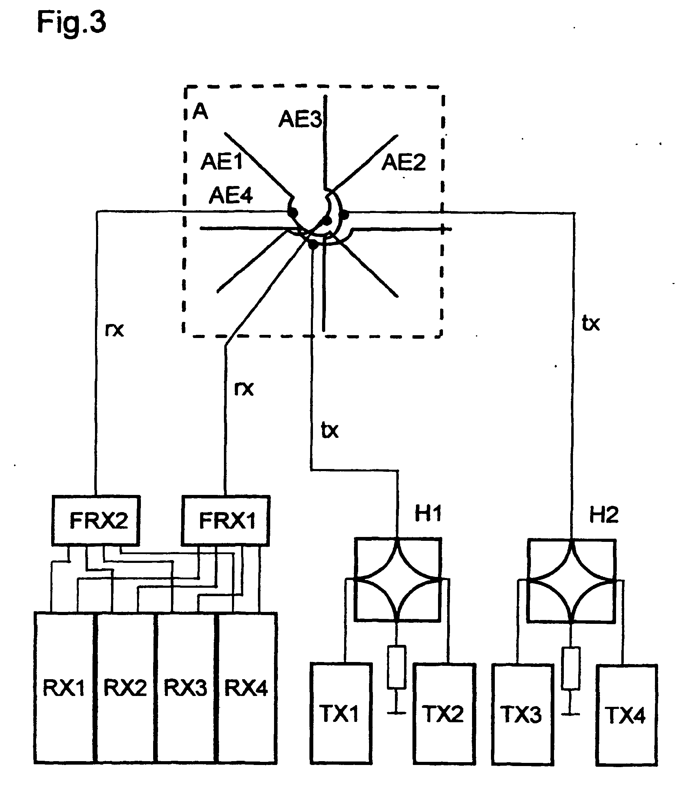

Die Funkstation FS nach FIG 3 zeigt eine erfindungsgemäße Realisierungsmöglichkeit, wobei die Antenne A aus vier Erregersystemen AE..4 besteht. Diese sind beispielhaft jeweils zueinander um 45 Grad geneigt, es könnte jedoch auf eine andere Anzahl von Erregersystemen mit andersartiger Neigung eingesetzt werden. Ein erstes Erregersystem AE1 ist mit einem ersten Trennverstärker FRX2 verbunden und ein zweites Erregersystem AE2 ist mit einem zweiten Trennverstärker FRX1 verbunden. Beide Trennverstärker FRX1, FRX2 sind jeweils mit einer ersten und zweiten Empfangseinheit RX1, RX2 verbunden und führen beiden jeweils die durch das erste und zweite Erregersystem AE1, AE2 empfangenen Empfangssignale rx zu. Eine erste und eine zweite Sendeeinheit TX1, TX2 sind direkt mit einem dritten bzw. vierten Erregersystem AE3, AE4 verbunden. Bei dieser Ausgestaltung kann auf Duplexer und Leistungskombiner verzichtet werden. Es wäre jedoch auch möglich, die Leistungen der ersten und zweiten Sendeeinheit TX1, TX2 zu kombinieren und nur einem einzigen Erregersystem . AE3 zuzuführen und auf das vierte Erregersystem AE4 zu verzichten.

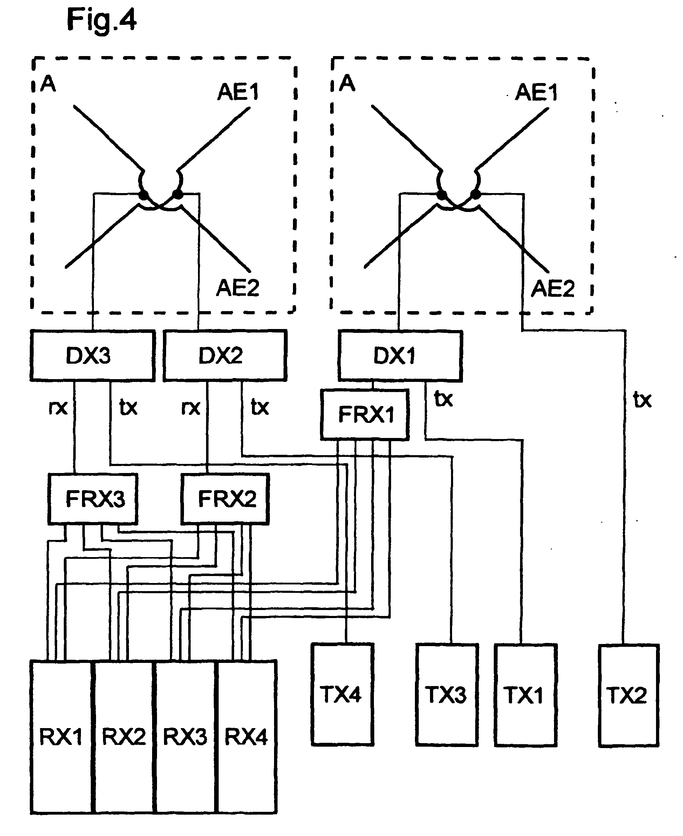

Die Funkstation FS nach FIG 4 gewährleistet allerdings bei erhöhtem Platzbedarf eine deutliche Verringerung der Dämpfungen der Sendesignale tx. Es werden durch den Einsatz zweier getrennter Antennen A mit jeweils zwei z.B. kreuzpolarisierten Erregersystemen AE1, AE2 die Leistungskombiner eingespart und damit bei gleicher Ausgangsleistung der Sendeeinheiten TX1..4 eine höhere Leistungsabstrahlung der Funkstation FS ermöglicht. Die Erregersysteme der zusätzlichen Antenne A werden zum Diversity-Empfang, damit ist auch ein dreifach Diversity möglich und zum Senden der Sendesignale tx von zwei Sendeeinheiten TX1, TX2 eingesetzt. Die Verteilung der Nutzung der Erregersysteme AE1, AE2 der beiden Antennen A kann jedoch auch auf andere Weise erfolgen, hier sind gemäß der Erfindung verschiedene Varianten entsprechend der konkreten Anforderungen an den Platzbedarf und die Sendeleistung möglich.

Für die Funkstationen FS nach den FIG 1 bis 4 können die Antennenleitungen Ltg1, Ltg2 ebenso auf eine einzige oder auf eine Anzahl, die geringer als die der Erregersysteme AE1..4 ist, durch Duplexen reduziert werden.

## Patentansprüche

1. Funkstation (FS) zum Senden und Empfangen digitaler Informationen in einem Mobil-Kommunikationssystem,
- mit einer Antenne (A) zum Senden und Empfangen, die ein erstes und zweites Erregersystem (AE1, AE2) mit unterschiedlicher Polarisation aufweist,
- mit zumindest einer ersten Sendeeinheit (TX1, TX2,.., TXn),
- mit zumindest einer ersten Empfangseinheit (RX1, RX2,.., RXn), **dadurch gekennzeichnet, daß**
- das erste und zweite Erregersystem (AE1, AE2) eine Verbindung zur ersten Empfangseinheit (RX1) aufweisen,
- die erste Empfangseinheit (RX1) zum Diversity-Empfang ausgebildet ist, um den Ausfall eines Empfangspfades von einem Erregersystem (AE1, AE2) zu kompensieren,
- die Antenne (A) zumindest ein drittes Erregersystem (AE3) mit zum ersten und zweiten Erregersystem (AE1, AE2) unterschiedlicher Polarisation aufweist, und
- des dritte Erregersystem (AE3) eine Verbindung mit zumindest der ersten Sendeeinheit (TX1) aufweist.

2. Funkstation (FS) nach Anspruch 1, bei der die Antenne (A) zumindest ein weiteres Erregersystem (AE4) aufweist, das zum Diversity-Empfang genutzt wird.

3. Funkstation (FS) nach Anspruch 1 oder 2, bei der die Antenne (A) zumindest ein weiteres Erregersystem (AE4) aufweist, das zum Senden genutzt wird.

4. Funkstation (FS) nach einem der vorhergehenden Ansprüche, bei der die Empfangseinheiten (RX1, RX2,.., RXn) jeweils mit einem ersten und zweiten Trennverstärker (FRX1, FRX2) verbunden sind und die Trennverstärker (FRX1, FRX2) die Leistung der von den zwei Erregersystemen (AE1, AE2) empfangenen Empfangssignale (rx) entsprechend auf die Empfangseinheiten (RX1, RX2,.., RXn) verteilen.

5. Funkstation (FS) nach einem der vorhergehenden Ansprüche, bei der zumindest zwei Sendeeinheiten (TX1, TX2,.., TXn) über einen Leistungscombiner (H1, H2) direkt mit einem Erregersystem (AE3, AE4)verbunden sind.

6. Funkstation (FS) nach einem der vorhergehenden Ansprüche, bei der die ersten und zweiten Erregersysteme (AE1, AE2) einen gemeinsamen geometrischen Mittelpunkt haben.

7. Funkstation (FS) nach einem der vorhergehenden Ansprüche, bei der die Erregersyteme (AE1, AE2) durch Elementegruppen gebildet werden.

8. Funkstation (FS) nach einem der vorhergehenden Ansprüche, bei der die Erregersysteme (AE1, AE2, AE3) derart angeordnet sind, daß die Kreuzpolarisationsentkopplung mindestens 30 dB beträgt.

9. Funkstation (FS) nach einem der vorhergehenden Ansprüche, bei der die Polarisationsebenen des ersten und zweiten Erregersystems (AE1, 2) zueinander 90° oder nahezu 90° geneigt sind.

10. Funkstation (FS) nach einem der vorhergehenden Ansprüche, bei der die Polarisationsebenen des ersten und zweiten Erregersystems (AE1, AE2) 45° oder nahezu 45° zur Horizontalen geneigt sind.

11. Funkstation (FS) nach einem der vorhergehenden Ansprüche, bei der die Polarisationsebene eines die Sendesignale (tx) abstrahlenden Erregersystems (AE1) 90° oder nahezu 90° zur Horizontalen geneigt ist.

12. Funkstation (FS) nach einem der vorhergehenden Ansprüche, bei der mehrere Antennenleitungen (Ltg1, Ltg2) auf gemeinsamen physikalischen Leitungen realisiert werden.

13. Funkstation (FS) nach einem der vorhergehenden Ansprüche, bei der eine zweite Antenne (A) vorgesehen ist, bei der zumindest ein Erregersystem (AE1, AE2) zum Senden oder zum Diversity-Empfang genutzt wird.

14. Funkstation (FS) nach einem der vorhergehenden Ansprüche, die eine Basisstation eines Mobilfunknetzes bildet.

## Claims

1. Radio station (FS) for transmitting and receiving digital information in a mobile communication system,
- having an antenna (A) for transmitting and receiving which has a first and second exciter system (AE1, AE2) with different polarisations,
- having at least a first transmitting unit (TX1, TX2, .., TXn),
- having at least a first receiving unit (RX1, RX2, .., RXn),
**characterised in that**
- the first and second exciter systems (AE1, AE2) are connected to the first receiving unit (RX1),
- the first receiving unit (RX1) is embodied for diversity reception in order to compensate for the failure of a receive path of an exciter system (AE1, AE2),
- the antenna (A) has at least a third exciter system (AE3) having a different polarisation from the first and second exciter system (AE1, AE2), and
- the third exciter system (AE3) is connected to at least the first transmitting unit (TX1).

2. Radio station (FS) according to claim 1, wherein the antenna (A) has at least one further exciter system (AE4) which is used for diversity reception.

3. Radio station (FS) according to claim 1 or 2, wherein the antenna (A) has at least one further exciter system (AE4) which is used for transmitting.

4. Radio station (FS) according to one of the preceding claims, wherein the receiving units (RX1, RX2, .., RXn) are in each case connected to a first and second isolating amplifier (FRX1, FRX2) and the isolating amplifiers (FRX1, FRX2) distribute the power of the receive signals (rx) received by the two exciter systems (AE1, AE2) accordingly to the receiving units (RX1, RX2, .., RXn).

5. Radio station (FS) according to one of the preceding claims, wherein at least two transmitting units (TX1, TX2, .., TXn) are connected directly to an exciter system (AE3, AE4) via a power combiner (H1, H2).

6. Radio station (FS) according to one of the preceding claims, wherein the first and second exciter systems (AE3, AE4) have a common geometric centre point.

7. Radio station (FS) according to one of the preceding claims, wherein the exciter systems (AE3, AE4) are formed by element groups.

8. Radio station (FS) according to one of the preceding claims, wherein the exciter systems (AE1, AE2, AE3) are arranged in such a manner that the cross-polarisation decoupling is at least 30 dB.

9. Radio station (FS) according to one of the preceding claims, wherein the polarisation planes of the first and second exciter system (AE1, AE2) are inclined at 90° or almost 90° to each other.

10. Radio station (FS) according to one of the preceding claims, wherein the polarisation planes of the first and second exciter system (AE1, AE2) are inclined at 45° or almost 45° to the horizontal.

11. Radio station (FS) according to one of the preceding claims, wherein the polarisation plane of an exciter system (AE1) radiating the transmit signals is inclined at 90° or almost 90° to the horizontal.

12. Radio station (FS) according to one of the preceding claims, wherein a plurality of antenna cables (Ltg1, Ltg2) are implemented using common physical cables.

13. Radio station (FS) according to one of the preceding claims, wherein a second antenna (A) is provided wherein at least one exciter system (AE1, AE2) is used for transmitting or for diversity reception.

14. Radio station (FS) according to one of the preceding claims which forms a base station of a mobile radio network.

## Revendications

1. Station radio (FS) pour émettre et recevoir des informations numériques dans un système de communication mobile,
- comprenant une antenne (A) pour émettre et recevoir, qui présente un premier et un deuxième systèmes d'excitation (AE1, AE2) ayant une polarisation différente,
- comprenant au moins une première unité d'émission (TX1, TX2, ..., TXn),
- comprenant au moins une première unité de réception (RX1, RX2, ..., RXn),
**caractérisé en ce que**
- le premier et le deuxième systèmes d'excitation (AE1, AE2) présentent une liaison vers la première unité de réception (RX1),
- la première unité de réception (RX1) est exécutée pour la réception en diversity, afin de compenser la défaillance d'une voie de réception d'un système d'excitation (AE1, AE2),
- l'antenne (A) présente au moins un troisième système d'excitation (AE3) ayant une polarisation différente par rapport au premier et au deuxième systèmes d'excitation (AE1, AE2), et
- le troisième système d'excitation (AE3) présente une liaison avec au moins la première unité d'émission (TX1).

2. Station radio (FS) selon la revendication 1, dans laquelle l'antenne (A) présente au moins un autre système d'excitation (AE4) qui est utilisé pour la réception en diversity.

3. Station radio (FS) selon la revendication 1 ou 2, dans laquelle l'antenne (A) présente au moins un autre système d'excitation (AE4) qui est utilisé pour émettre.

4. Station radio (FS) selon l'une quelconque des revendications précédentes, dans laquelle les unités de réception (RX1, RX2, ..., RXn) sont respectivement raccordées à un premier et à un deuxième amplificateurs séparateurs (FRX1, FRX2) et dans laquelle les amplificateurs séparateurs (FRX1, FRX2) répartissent la puissance des signaux de réception (rx) reçus par les deux systèmes d'excitation (AE1, AE2) de manière correspondante sur les unités de réception (RX1, RX2, ..., RXn).

5. Station radio (FS) selon l'une quelconque des revendications précédentes, dans laquelle au moins deux unités d'émission (TX1, TX2, ..., TXn) sont raccordées directement à un système d'excitation (AE3, AE4) par l'intermédiaire d'un combineur de puissance (H1, H2).

6. Station radio (FS) selon l'une quelconque des revendications précédentes, dans laquelle le premier et le deuxième systèmes d'excitation (AE1, AE2) ont un centre géométrique commun.

7. Station radio (FS) selon l'une quelconque des revendications précédentes, dans laquelle les systèmes d'excitation (AE1, AE2) sont formés par des groupes d'éléments.

8. Station radio (FS) selon l'une quelconque des revendications précédentes, dans laquelle les systèmes d'excitation (AE1, AE2, AE3) sont disposés de telle manière que le découplage de la polarisation croisée est d'au moins 30 dB.

9. Station radio (FS) selon l'une quelconque des revendications précédentes, dans laquelle les plans de polarisation du premier et du deuxième systèmes d'excitation (AE1, AE2) sont inclinés de 90° ou presque 90° les uns par rapport aux autres.

10. Station radio (FS) selon l'une quelconque des revendications précédentes, dans laquelle les plans de polarisation du premier et du deuxième systèmes d'excitation (AE1, AE2) sont inclinés de 45° ou presque 45° par rapport à l'horizontale.

11. Station radio (FS) selon l'une quelconque des revendications précédentes, dans laquelle le plan de polarisation d'un système d'excitation (AE1) émettant les signaux d'émission (tx) est incliné de 90° ou presque 90° par rapport à l'horizontale.

12. Station radio (FS) selon l'une quelconque des revendications précédentes, dans laquelle plusieurs lignes d'antenne (Ltg1, Ltg2) sont réalisées sur des lignes physiques communes.

13. Station radio (FS) selon l'une quelconque des revendications précédentes, dans laquelle est prévue une deuxième antenne (A), dans laquelle au moins un système d'excitation (AE1, AE2) est utilisé pour émettre ou pour la réception en diversity.

14. Station radio (FS) selon l'une quelconque des revendications précédentes, qui forme une station de base d'un réseau de radiocommunication mobile.
